# EUROPEAN PATENT APPLICATION

(11) **EP 4 830 905 A1**
(43) Date of publication of application: **28.10.2026**
(21) Application number: 26158599.6
(22) Date of filing: 13.02.2026
(51) Int. Cl.: B29C 70/34, B29C 53/02, B29C 53/04, B29C 70/38, B29C 70/42, B29C 70/54, B29C 70/56, B29D 99/00, B64F 5/10

(54) **HANDLING AND SHAPING OF COMPOSITE MEMBERS WITH COLLABORATIVE ROBOT COMPLIANCE IMPLEMENTATION METHOD**

(30) Priority: 23.04.2025 US 202519187742
(71) Applicant: The Boeing Company, Arlington, VA 22202 (US)
(72) Inventor: Velasquez, Luis F., Arlington, 22202 (US); Duncan, Edward R., Arlington, 22202 (US)
(74) Representative: Arnold & Siedsma

(57) **Abstract**

Methods of shaping, compacting, and forming composite structures are presented. A method of shaping a composite structure is presented. An elongate composite member is held by a plurality of collaborative robots in an initial contour along a length of the elongate composite member. The elongate composite member is placed on a forming surface of a forming tool by the plurality of collaborative robots to form a final contour in the elongate composite member. A desired tension is maintained on at least a portion of the elongate composite member by the plurality of collaborative robots while placing the elongate composite member on the forming surface by at least one collaborative robot of the plurality of collaborative robots automatically moving in response to detecting a tension below a desired threshold.

## Description

### BACKGROUND INFORMATION

### 1. Field:

The present disclosure relates generally to composite manufacturing and, more particularly, to systems and methods for picking, placing, and shaping uncured elongate composite members.

### 2. Background:

A composite structure is typically formed by placing plies or layers of composite material on a forming tool that sets forth the shape and/or contour of the composite structure. Once placed, composite material is then consolidated and/or cured to form the composite structure. However, known techniques for transporting a composite material to a forming tool, placing a composite material on a forming tool, and consolidating a composite material on a forming tool may be labor-intensive and time-consuming. Additionally, depending upon the degree of contour and geometry of the composite structure, special handling may be used to prevent introduction of defects during transfer and placement of the composite material. Accordingly, those skilled in the art continue with research and development efforts in the field of composite manufacturing.

Therefore, it would be desirable to have a method and apparatus that takes into account at least some of the issues discussed above, as well as other possible issues.

### SUMMARY

An example of the present disclosure provides a method of shaping a composite structure. An elongate composite member is held by a plurality of collaborative robots in an initial contour along a length of the elongate composite member. The elongate composite member is placed by the plurality of collaborative robots on a forming surface of a forming tool to form a final contour in the elongate composite member. A desired tension is maintained, preferably by the plurality of collaborative robots, on at least a portion of the elongate composite member while placing the elongate composite member on the forming surface by at least one collaborative robot of the plurality of collaborative robots automatically moving in response to detecting a tension below a desired threshold.

Maintaining the desired tension on at least a portion of the elongate composite member may comprise moving at the least one collaborative robot of the plurality of collaborative robots outside of a programmed path. Maintaining the desired tension on at least a portion of the elongate composite member may comprise moving the at least one collaborative robot of the plurality of collaborative robots in a motion perpendicular to a length of the elongate composite member. Maintaining the desired tension on at least a portion of the elongate composite member may comprise moving the at least one collaborative robot of the plurality of collaborative robots in a motion parallel to a length of the elongate composite member. The elongate composite member may comprise a nonplanar cross-sectional shape.

The method may further comprise compacting, by at least one of the plurality of collaborative robots, a portion of the elongate composite member after placing the portion of the elongate composite member on the forming surface. Compacting, by at least one of the plurality of collaborative robots, may comprise driving the at least one of the plurality of collaborative robots according to, and/or along, a programmed path that is within the forming tool. Compacting, by at least one of the plurality of collaborative robots, may comprise deviating from a programmed path in response to detecting a pressure outside of a detected range. The plurality of collaborative robots may perform placing the elongate composite member on the forming surface while a human operator is in a manufacturing environment containing the plurality of collaborative robots and the forming tool. A collaborative robot of the plurality of collaborative robots may cease movement in response to detecting a force outside of a desired range. Placing, by the plurality of collaborative robots, the elongate composite member on the forming surface of the forming tool may comprise moving the plurality of collaborative robots according to, and/or along, programmed paths for placing the elongate composite member on a forming surface of a forming tool, and wherein maintaining the desired tension comprises deviating from at least one programmed path of the programmed paths.

Another example of the present disclosure provides a method of compacting a composite structure, preferably an elongate composite member. An end effector is driven by a collaborative robot according to, and/or along, a programmed path. Compaction pressure applied by the end effector to the (preferably elongate) composite member (preferably when the elongate composite member is on the forming tool) is moderated, based on detected force from force sensors of the collaborative robot, based on force sensors of the collaborative robot.

The programmed path may be below a forming surface of the forming tool to compact the elongate composite member to the forming tool. The method may further comprise dynamically adjusting a driven path of the end effector based on tolerance deviations for the forming tool. The method may further comprise dynamically adjusting a driven path of the end effector based on a topography of a forming surface of the forming tool. Driving the end effector may comprise driving the end effector along a three-dimensional contour to impart a complex curvature into the elongate composite member. Driving the end effector by the collaborative robot may comprise rolling a compactor across the elongate composite member.

Yet another example of the present disclosure provides a method of forming a composite structure. A plurality of collaborative robots holds an elongate composite member in an initial contour along a length of the elongate composite member. The plurality of collaborative robots is moved according to, and/or along, programmed paths for placing the elongate composite member on a forming surface of a forming tool while a human operator is in a manufacturing environment with the plurality of collaborative robots, preferably wherein placing the elongate composite member forms a final contour in the elongate composite member. Forces on the plurality of collaborative robots are continuously monitored during the moving.

The method may further comprise comparing monitored forces on the plurality of collaborative robots to a desired range, and ceasing movement of at least one collaborative robot of the plurality of collaborative robots in response to detecting a force outside of the desired range. The method may further comprise dynamically adjusting a driven path for a collaborative robot of the plurality of collaborative robots from a programmed path based on monitored forces on the plurality of collaborative robots. Placing the elongate composite member may form a final contour in the elongate composite member.

Yet another example of the present disclosure provides a method of forming a composite structure. An elongate composite member is formed to a forming surface of a forming tool using a plurality of collaborative robots while a human operator is in a manufacturing environment with the plurality of collaborative robots. Movement of at least one collaborative robot of the plurality of collaborative robots is ceased in response to detecting a force outside of a desired range when the at least one collaborative robot is in contact with the human operator.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of an isometric view of a plurality of automated manipulators holding an elongate composite member in an initial contour in accordance with an illustrative example;
**Figure 4** is an illustration of an isometric view of a plurality of automated manipulators forming an elongate composite member into a final contour in accordance with an illustrative example;
**Figure 5** is an illustration of an isometric view of an elongate composite member having an initial contour in accordance with an illustrative example;
**Figure 6** is an illustration of an isometric view of an elongate composite member having a final contour in accordance with an illustrative example;
**Figure 7** is an illustration of a front view of a programmed path relative to an elongate composite member and a forming tool in accordance with an illustrative example;
**Figure 8** is an illustration of a side view of a programmed path relative to an elongate composite member and a forming tool in accordance with an illustrative example;
**Figures 9A** and **9B** are a flowchart of a method of shaping a composite structure in accordance with an illustrative example;
**Figure 10** is a flowchart of a method of compacting a composite structure in accordance with an illustrative example;
**Figure 11** is a flowchart of a method of forming a composite structure in accordance with an illustrative example;
**Figure 12** is a flowchart of a method of forming a composite structure in accordance with an illustrative example;
**Figure 13** is an illustration of an aircraft manufacturing and service method in a form of a block diagram in accordance with an illustrative example; and
**Figure 14** is an illustration of an aircraft in a form of a block diagram in which an illustrative example may be implemented.

### DETAILED DESCRIPTION

The illustrative examples recognize and take into account several considerations. The illustrative examples recognize and take into account that a composite structure can comprise several composite members formed of uncured composite material. The illustrative examples recognize and take into account that handling of uncured composite members while maintaining non-planar cross-sections of the uncured composite members is currently performed using human operators. The illustrative examples recognize and take into account that during an install forming sequence end effectors can apply compaction in a controlled manner at the interaction point between an elongate composite member and the forming tool. The illustrative examples recognize and take into account that compaction in regions between robot end effectors will improve quality of the elongate composite member during installation forming step. The illustrative examples recognize and take into account that the forming rate can vary in regions of high curvature or skin joggles. The illustrative examples recognize and take into account that during an install forming sequence controlling and maintaining the tension in the composite member by proper manipulation of the end effectors will improve quality of the elongate composite member.

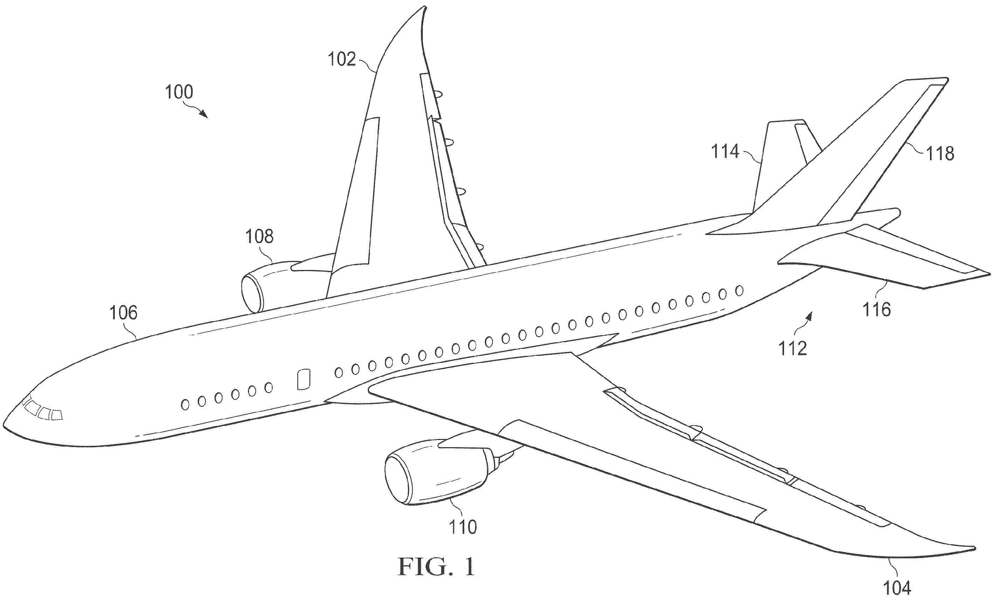

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have composite structures formed using collaborative robot compliance methods. For example, a composite stiffener of at least one of wing **102,** wing **104,** or body **106** can be formed using the methods of the illustrative examples.

Although the illustrative examples are described with respect to an aircraft, an illustrative example may be applied to other types of platforms. The platform may be, for example, a mobile platform, a stationary platform, a land-based structure, an aquatic-based structure, or a space-based structure. More specifically, the platform, may be a surface ship, a tank, a personnel carrier, a train, a spacecraft, a space station, a satellite, a submarine, an automobile, a power plant, a house, a manufacturing facility, a building, a refinery, a chemical containment unit, fuel tank, passenger cabin, or other suitable platforms.

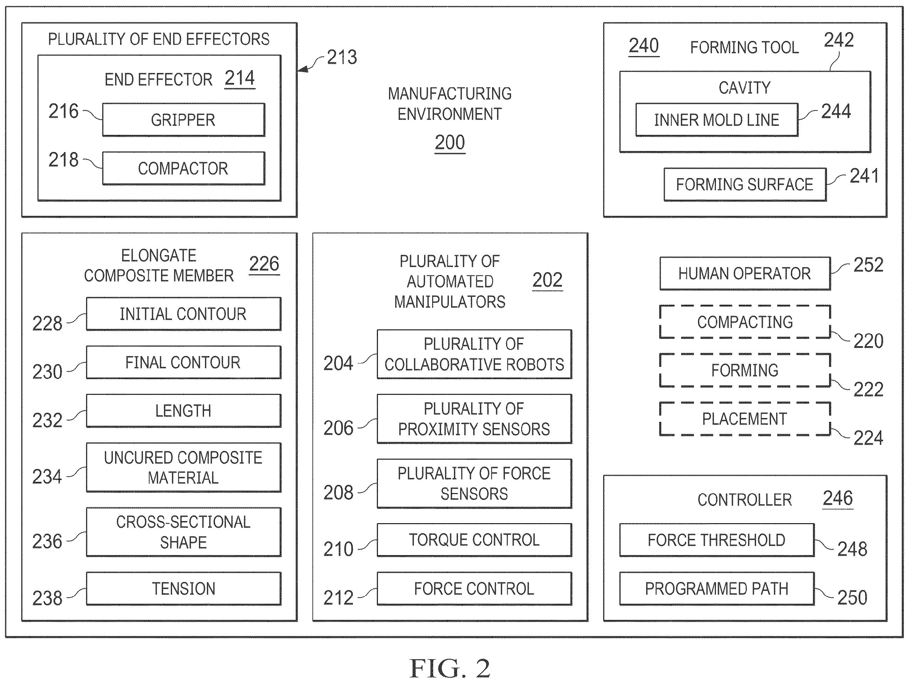

Turning now to **Figure 2****,** an illustration of a block diagram of a manufacturing environment is depicted in accordance with an illustrative example.

Plurality of automated manipulators **202** are present in manufacturing environment **200.** Plurality of automated manipulators **202** can perform placement **224,** forming **222,** and compacting **220** of elongate composite member **226** against forming tool **240.** Placement **224** of elongate composite member **226** moves and places elongate composite member **226** onto forming tool **240.** Forming **222** forms elongate composite member **226** against forming tool **240.** Prior to forming, elongate composite member **226** has initial contour **228.**

Elongate composite member **226** has a relatively high aspect ratio and has length **232** magnitudes of order greater than a width of cross-sectional shape **236.** Elongate composite member **226** has initial contour **228.** Initial contour **228** refers to a curvature, bend, twist, or shape along a longitudinal axis of elongate composite member **226** prior to picking and placement **224** of elongate composite member **226** on forming tool **240.** In some illustrative examples, initial contour **228** is straight or substantially straight. In some illustrative examples, elongate composite member **226** has little to no curvature, bend, or twist along a longitudinal axis of elongate composite member **226.** In some illustrative examples, initial contour **228** is not substantially straight and can include a low degree of curvature, bend, or twist along the longitudinal axis of elongate composite member **226.** In other examples, the initial contour **228** includes other degrees of curvature, bend, or twist along the longitudinal axis of elongate composite member **226.**

After forming **222,** elongate composite member **226** has final contour **230** along length **232.** In some illustrative examples, final contour **230** comprises at least one of twists, skin joggles, or high curvature. Final contour **230** refers to the curvature, bend, twist, or shape along the longitudinal axis of elongate composite member **226** after forming **222** elongate composite member **226** on forming tool **240.** In some illustrative examples, final contour **230** comprises a complex curvature a high degree of curvature, bend, or twist along the longitudinal axis. The degree of curvature, bend, or twist of final contour **230** is dependent on a curvature of the surface of forming tool **240.** The degree of curvature, bend, or twist of final contour **230** is dependent on the desired final contour of a composite structure, such as a composite structure of aircraft **100 of** **Figure 1****.** In some illustrative examples, final contour **230** comprises one or more of a lengthwise bend or curvature, a side-to-side bend or curvature, or a twist about the longitudinal axis.

Elongate composite member **226** has cross-sectional shape **236.** In some illustrative examples, cross-sectional shape **236** is non-planar. In some illustrative examples, cross-sectional shape **236** is a hat-shaped cross-section. Elongate composite member **226** has cross-sectional shape **236** in both initial contour **228** and final contour **230.** End effector **214** can be used for placement **224,** forming **222,** and compacting **220.** End effector **214** is connected to an automated manipulator of plurality of automated manipulators **202.** In some illustrative examples, end effector **214** comprises gripper **216** configured to perform picking, placement **224,** and forming **222.** In some illustrative examples, gripper **216** has a cross-sectional shape configured to accommodate cross-sectional shape **236.** In some illustrative examples, end effector **214** comprises compactor **218** configured to perform compacting **220** of elongate composite member **226.** In some illustrative examples, compactor **218** has a cross-sectional shape configured to accommodate cross-sectional shape **236.**

In some illustrative examples, plurality of automated manipulators **202** comprises plurality of collaborative robots **204.** Plurality of collaborative robots **204** have force control **212** and torque control **210** capabilities. Force control **212** and torque control **210** capabilities enable enhanced compacting **220,** enhanced forming **222,** and enhanced placement **224** of elongate composite member **226.** Force control **212** and torque control **210** of plurality of collaborative robots **204** allows for operation of plurality of collaborative robots **204** in manufacturing environment **200** with human operator **252.** Collaborative robot compliance features including force control **212** and torque control **210** can be used for lateral self-alignment within elongate composite member **226.** The collaborative robot compliance features can be used for applying/controlling lengthwise tension **238** in elongate composite member **226** during a steering sequence.

Plurality of collaborative robots **204** performs placement **224** elongate composite member **226** on forming surface **241** while human operator **252** is in manufacturing environment **200** containing plurality of collaborative robots **204** and forming tool **240.** In some illustrative examples, a collaborative robot of plurality of collaborative robots **204** ceases movement in response to detecting a force outside of a desired range. In some illustrative examples, the force is detected by one of plurality of force sensors **208** of plurality of automated manipulators **202.** In some illustrative examples, a collaborative robot of plurality of collaborative robots **204** ceases movement in response to detecting a presence of human operator **252** using a proximity sensor of plurality of proximity sensors **206.** In some illustrative examples, a collaborative robot of plurality of collaborative robots **204** ceases movement in response to detecting a presence of human operator **252** within reach of the collaborative robot.

Elongate composite member **226** is formed of uncured composite material **234.** Uncured composite material **234** is flexible and will have a tendency to droop between grip points. Uncured composite material **234** includes any suitable base materials used in composite manufacturing. Uncured composite material **234** comprises a fiber reinforcement and a matrix. In some illustrative examples, uncured composite material **234** can also include one or more additives, such as, but not limited to, toughening additives, curing agents, binders, or any other desirable additive.

In some illustrative examples, uncured composite material **234** comprises a fiber reinforcement impregnated with a matrix to form a pre-preg. In some illustrative examples, uncured composite material **234** comprises a dry fiber material. The fiber reinforcement comprises carbon fiber, glass fiber, aramid fiber, or any other desirable type of reinforcement material. The fiber reinforcement can be provided in any desirable form, such as woven, nonwoven, fabric, tape, or any other desirable form. The matrix comprises any desirable type of matrix such as a resin, an epoxy, a polymer, or any other desirable type of matrix. The matrix can be thermoplastic or thermoset.

Plurality of automated manipulators **202** enables automated handling of elongate composite member **226.** Plurality of automated manipulators **202** apply and control tension **238** in elongate composite member **226** during holding, forming **222,** and placement **224.** Tension **238** can also be referred to as lengthwise composite member tension. In some illustrative examples, elongate composite member **226** is a composite stiffener, such as a stringer. In these illustrative examples, tension **238** can be referred to as lengthwise stringer tension. Tension **238** is along length **232** of elongate composite member **226.** Providing tension **238** provides improved support during handling and steering sequence for elongate composite member **226.** Automated handling using plurality of automated manipulators **202,** especially plurality of collaborative robots **204,** results in more uniform tension **238** in elongate composite member **226.** Automated handling using plurality of automated manipulators **202,** especially plurality of collaborative robots **204,** provides more predictable behavior of elongate composite member **226** between grip points.

Plurality of automated manipulators **202** apply and control compaction force to elongate composite member **226** on the surface of forming tool **240.** Force control of plurality of automated manipulators **202** allows the system to adapt to variable tool surface topography and tolerance deviations in forming tool **240.**

Use of plurality of automated manipulators **202** enhances accuracy of placement **224,** forming **222,** and compacting **220** regardless of dimensional tool tolerance errors of forming tool **240** or of tool indexing deviations.

End effectors, including end effector **214,** can apply compaction using mechanical rolling, vacuum, or any other desirable method. The end effectors perform compacting **220** in a controlled manner at the interaction point between elongate composite member **226** and forming tool **240.** Compaction in regions between robot end effectors attached to plurality of automated manipulators **202** will improve quality during installation forming **222** steps. Rate of forming **222** can vary in regions of high curvature or skin joggles.

Dynamic control of the forces being applied to elongate composite member **226** by plurality of automated manipulators **202** and the motion planning to adapt to changing conditions makes the system more robust, flexible and agile than systems that perform a preprogrammed sequence without deviations. As a result, programmed path **250** for compacting **220** can be positioned within forming tool **240** and compacting **220** can still be performed to a desirable quality. In some illustrative examples, programmed path **250** can be below inner mold line **244** and plurality of automated manipulators **202** can still perform compacting **220.** Using plurality of force sensors **208** and force threshold **248,** controller **246** can control an amount of compaction applied by plurality of automated manipulators **202.** Using plurality of force sensors **208** and force threshold **248** allows an automated manipulator of plurality of automated manipulators **202** to have a driven path deviating from programmed path **250** as the respective automated manipulator attempts to follow programmed path **250** during compacting **220.** The driven path may also be referred to as a traveled path. The driven path is the path traversed by the automated manipulator while trying to follow programmed path **250.**

The illustration of manufacturing environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, although end effector **214** comprises both gripper **216** and compactor **218,** in some illustrative examples, a gripper and a compactor are separate end effectors. As another example, although forming tool **240** is depicted as a female tool with cavity **242,** in other illustrative examples, forming tool **240** can have a raised section forming an outer mold line.

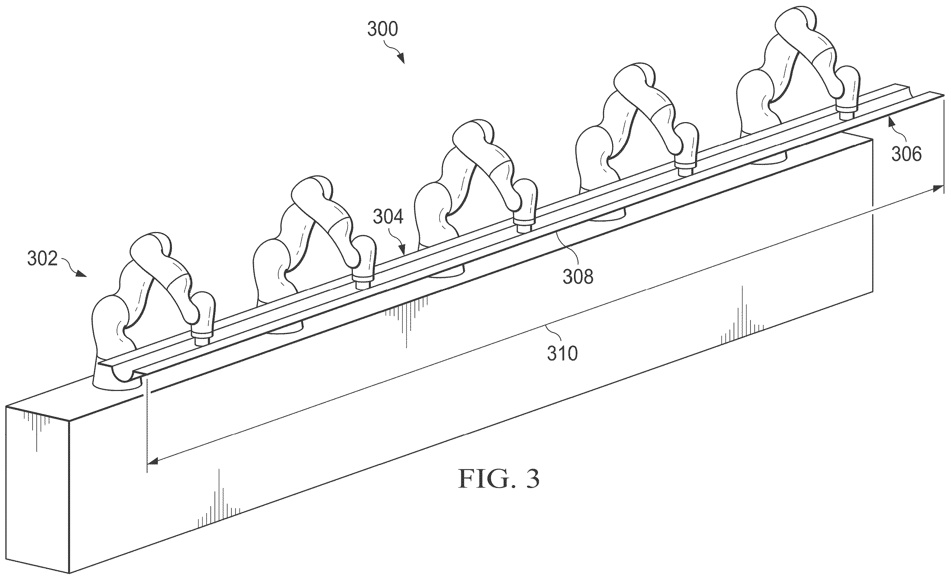

Turning now to **Figure 3****,** an illustration of an isometric view of a plurality of automated manipulators holding an elongate composite member in an initial contour is depicted in accordance with an illustrative example. Plurality of collaborative robots **302** is a physical implementation of plurality of automated manipulators **202** of **Figure 2****.** Plurality of collaborative robots **302** can be used to handle and form an elongate composite member of aircraft **100** of **Figure 1****.** Plurality of collaborative robots **302** can be referred to as plurality of automated manipulators.

In view **300,** plurality of collaborative robots **302** is holding elongate composite member **304** in initial contour **306.** Plurality of collaborative robots **302** hold unformed portions **308.** In this illustrative example, plurality of collaborative robots **302** is distributed across length **310.**

In view **300,** plurality of collaborative robots **302** has picked up elongate composite member **304** and is moving elongate composite member **304** towards a forming tool (not depicted). While holding elongate composite member **304,** plurality of collaborative robots **302** holds elongate composite member **304** in tension. Plurality of collaborative robots **302** holds elongate composite member **304** in tension by monitoring force sensors of plurality of collaborative robots **302.** To maintain tension in elongate composite member **304,** at least one automated manipulator of plurality of collaborative robots **302** deviates from a programmed path. At least one automated manipulator of plurality of collaborative robots **302** deviates from at least one programmed path of the programmed paths in response to detecting a tension outside of a desired range. In some illustrative examples, at least one automated manipulator can move vertically relative to the manufacturing floor to maintain tension in elongate composite member **304.** In some illustrative examples, at least one automated manipulator can move horizontally relative to the manufacturing floor to maintain tension in elongate composite member **304.** In some illustrative examples, at least one automated manipulator can move parallel to the length of elongate composite member **304** to maintain tension in elongate composite member **304.**

The illustration of a manufacturing environment in view **300** in **Figure 3** is not meant to imply physical or architectural limitations to the manner in which an illustrative example may be implemented. Other components in addition to or in place of the ones illustrated may be used. Some components may be unnecessary. For example, although plurality of collaborative robots **302** is depicted as having five collaborative robots, any desirable quantity of collaborative robots can be utilized. Additionally, although plurality of collaborative robots **302** is depicted as having approximately equal spacing, in some illustrative examples spacing between at least one pair of collaborative robots can be different from spacings between other collaborative robots of plurality of collaborative robots **302.**

While handling or transporting elongate composite member **304** in a pre-cure state, elongate composite member **304** is flimsy, non-rigid and susceptible to bending, buckling and twisting. Mishandling can lead to the introduction of wrinkles, bends, or other inconsistencies into elongate composite member **304,** or deformation of a cross-section of elongate composite member **304.** While handling elongate composite member **304,** it is desirable to maintain the cross-sectional shape of elongate composite member **304** and minimize drooping or sagging between grip points provided by plurality of collaborative robots **302.** Monitoring and controlling the tension in elongate composite member **304** while optimizing the support spacing provided by plurality of collaborative robots **302** during the handling and forming process enables maintaining the cross-sectional shape of elongate composite member **304.**

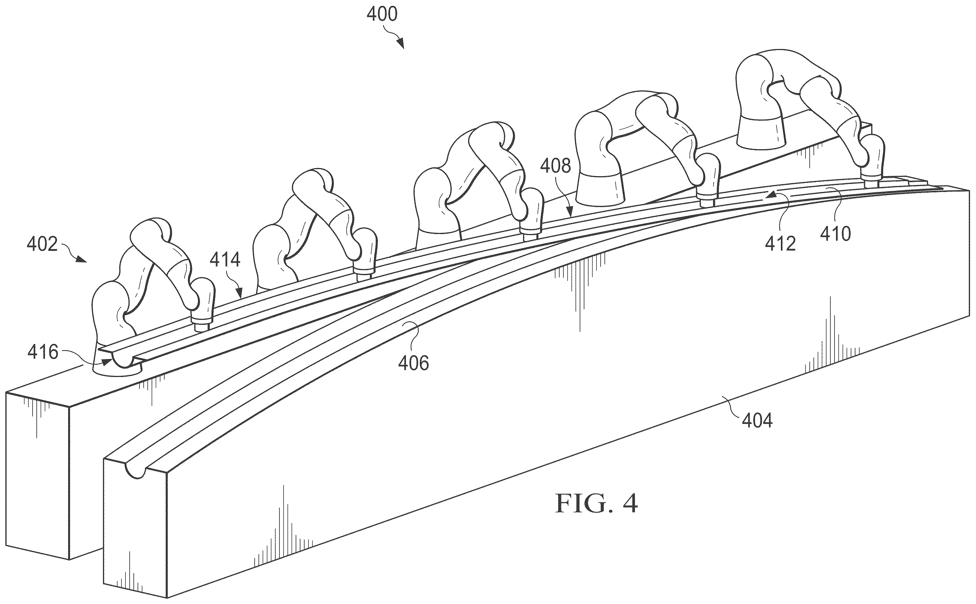

Turning now to **Figure 4****,** an illustration of an isometric view of a plurality of automated manipulators forming an elongate composite member into a final contour is depicted in accordance with an illustrative example. In some illustrative examples, plurality of collaborative robots **402** is the same as plurality of collaborative robots **302.** Plurality of collaborative robots **402** is a physical implementation of plurality of automated manipulators **202 of** **Figure 2****.** Plurality of collaborative robots **402** can be used to handle and form an elongate composite member of aircraft **100 of** **Figure 1****.** Plurality of collaborative robots **402** can be referred to as plurality of automated manipulators.

In view **400,** plurality of collaborative robots **402** is forming elongate composite member **408** onto forming surface **406** of forming tool **404.** In this illustrative example, elongate composite member **408** has been partially formed. Formed portions **410** of elongate composite member **408** have final contour **412.** Unformed portions **416** of elongate composite member **408** have initial contour **414.** In this illustrative example, plurality of collaborative robots **402** maintains tension in elongate composite member **408** during forming of elongate composite member **408** on forming tool **404.** As formed portions **410** are placed in contact with forming tool **404,** automated manipulators holding unformed portions **416** can deviate from programmed paths to maintain tension in unformed portions **416** of elongate composite member **408.**

The illustration of a manufacturing environment in view **400 in** **Figure 4** is not meant to imply physical or architectural limitations to the manner in which an illustrative example may be implemented. Other components in addition to or in place of the ones illustrated may be used. Some components may be unnecessary. For example, although plurality of collaborative robots **402** is depicted as having five collaborative robots, any desirable quantity of collaborative robots can be utilized. Additionally, although plurality of collaborative robots **402** is depicted as having approximately equal spacing, in some illustrative examples spacing between at least one pair of collaborative robots can be different from spacings between other collaborative robots of plurality of collaborative robots **402.**

While handling or transporting elongate composite member **408** in a pre-cure state, elongate composite member **408** is flimsy, non-rigid and susceptible to bending, buckling and twisting. Mishandling can lead to the introduction of wrinkles, bends, or other inconsistencies into elongate composite member **408,** or deformation of a cross-section of elongate composite member **408.** While handling elongate composite member **408,** it is desirable to maintain the cross-sectional shape of elongate composite member **408** and minimize drooping or sagging between grip points provided by plurality of collaborative robots **402.** Monitoring and controlling the tension in elongate composite member **408** while optimizing the support spacing provided by plurality of collaborative robots **402** during the handling and forming process enables maintaining the cross-sectional shape of elongate composite member **408.**

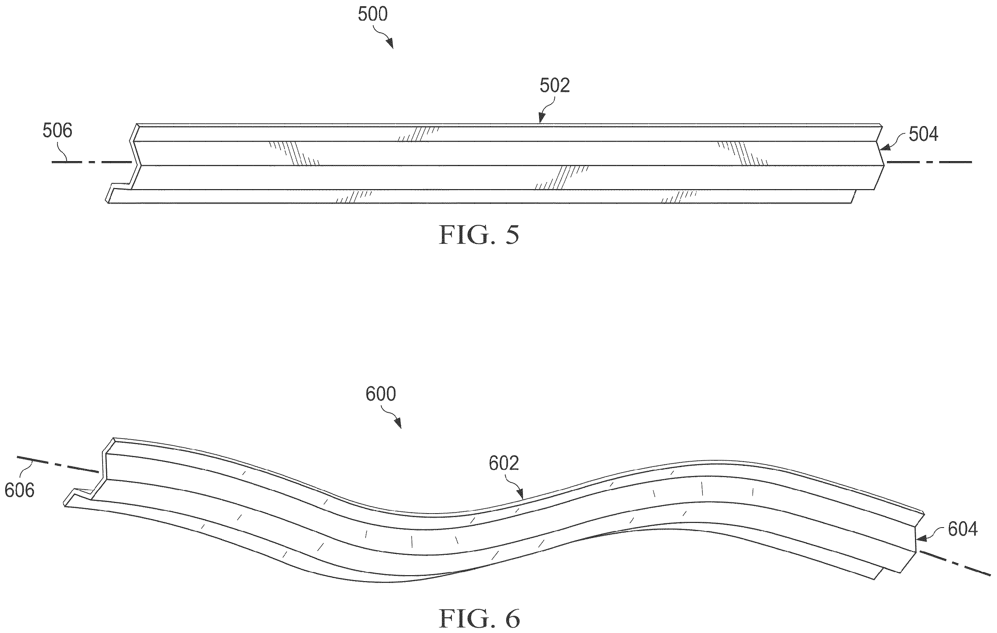

Turning now to **Figure 5****,** an illustration of an isometric view of an elongate composite member having an initial contour is depicted in accordance with an illustrative example. In some illustrative examples, elongate composite member **500** is a physical implementation of elongate composite member **226 of** **Figure 2****.** In some illustrative examples, elongate composite member **500** can be used to form a composite stiffener of aircraft **100 of** **Figure 1****.** In some illustrative examples, elongate composite member **500** can be formed by plurality of collaborative robots **302 of** **Figure 3****.** In some illustrative examples, elongate composite member **500** can be formed by plurality of collaborative robots **402 of** **Figure 4****.**

Elongate composite member **500** has initial contour **502** that is substantially straight. In this illustrative example, elongate composite member **500** has cross-sectional shape **504** that is hat-shaped. In other non-depicted examples, elongate composite member **500** comprises a J-shape, an I-shape, a C-shape, or any other desirable cross-sectional shape. Elongate composite member **500** is called an elongate member due to length **506** being substantially longer than a width of cross-sectional shape **504.**

Turning now to **Figure 6****,** an illustration of an isometric view of an elongate composite member having a final contour is depicted in accordance with an illustrative example. In some illustrative examples, elongate composite member **600** is a physical implementation of elongate composite member **226 of** **Figure 2****.** In some illustrative examples, elongate composite member **600** can be used to form a composite stiffener of aircraft **100 of** **Figure 1****.** In some illustrative examples, elongate composite member **600** can be formed by plurality of collaborative robots **302 of** **Figure 3****.** In some illustrative examples, elongate composite member **600** can be formed by plurality of collaborative robots **402 of** **Figure 4****.** In some illustrative examples, elongate composite member **600** can be elongate composite member **500** with a final contour.

Elongate composite member **600** has been formed from an initial contour into final contour **602.** Final contour **602** has a complex curvature. Final contour **602** has vertical curvature along length **606.** Elongate composite member **600** has consistent cross-sectional shape **604** throughout length **606.** In this illustrative example, cross-sectional shape **604** is a hat shaped cross-section. In other non-depicted examples, cross-sectional shape **604** comprises a J-shape, an I-shape, a C-shape, or any other desirable cross-sectional shape.

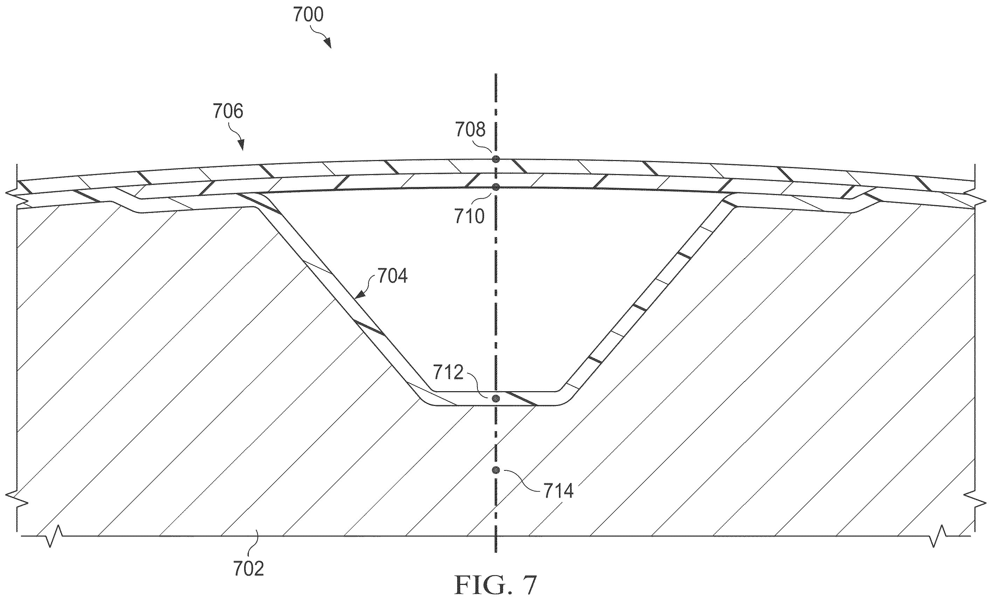

Turning now to **Figure 7****,** an illustration of a front view of a programmed path relative to an elongate composite member and a forming tool is depicted in accordance with an illustrative example. Programmed path **714** can be used to form a composite structure of aircraft **100 of** **Figure 1****.** Programmed path **714** can be an example of programmed path **250 of** **Figure 2****.** Programmed path **714** can be an example of a programmed path to form elongate composite member **304.** Programmed path **714** can be an example of a programmed path used to form elongate composite member **408.** Programmed path **714** can be an example of a programmed path to form elongate composite member **500.** Programmed path **714** can be an example of a programmed path used to form elongate composite member **600.**

View **700** is through forming tool **702** and composite structure **706** comprising elongate composite member **704.** Each of outer mold line **708,** elongate composite member surface **710,** inner mold line **712,** and programmed path **714** are depicted at a centerline through elongate composite member **704.** Programmed path **714** is a path that a collaborative robot will attempt to travel in compacting elongate composite member **704** against forming tool **702.** Programmed path **714** is positioned below inner mold line **712.**

As can be seen in view **700,** programmed path **714** is within forming tool **702** and thus cannot be accomplished by the collaborative robot. However, using force sensors, a force threshold, and compliance features, a collaborative robot can perform compacting along a driven path as the collaborative robot attempts to follow programmed path **714.**

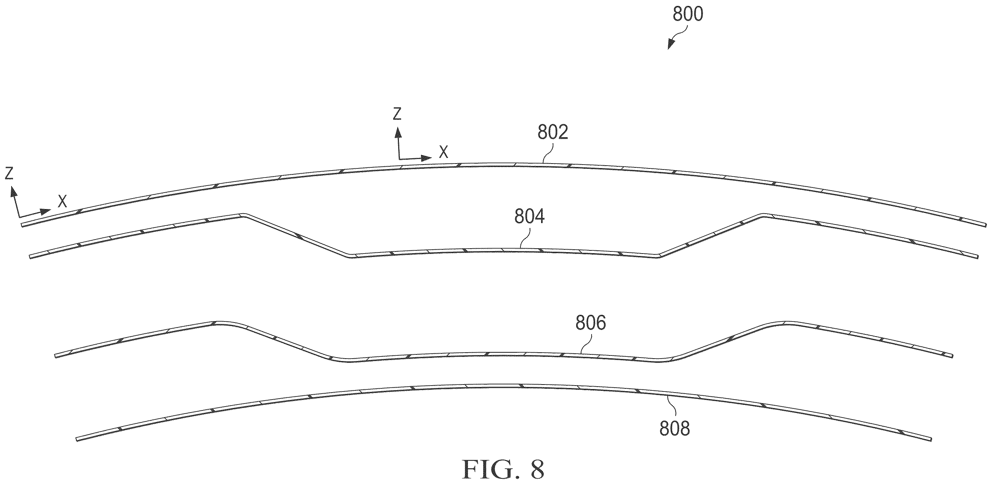

Turning now to **Figure 8****,** an illustration of a side view of a programmed path relative to an elongate composite member and a forming tool is depicted in accordance with an illustrative example. Programmed path **808** can be used to form a composite structure of aircraft **100 of** **Figure 1****.** Programmed path **808** can be an example of programmed path **250 of** **Figure 2****.** Programmed path **808** can be followed by an automated manipulator of plurality of collaborative robots **302.** Programmed path **808** can be followed by an automated manipulator of plurality of collaborative robots **402.** Programmed path **808** can be followed to form elongate composite member **500.** Programmed path **808** can be followed to form elongate composite member **600.** In some illustrative examples, the lines depicted in view **800** can be the same as the points depicted in **Figure 7****.**

View **800** is a side view of a programmed path **808** relative to a series of surfaces of a forming tool and an elongate composite member. In this illustrative example, programmed path **808** is below inner mold line **806** of a forming tool (not depicted). In some illustrative examples, programmed path **808** can be the same as programmed path **714 of** **Figure 7****.** To form a final curvature into an elongate composite member, the elongate composite member will be formed against inner mold line **806.** In some illustrative examples, inner mold line **806** is the same as inner mold line **712.** Surface **804** is an example of a surface of an elongate composite member after forming to inner mold line **806.** In some illustrative examples, surface **804** is the same as elongate composite member surface **710.** Surface **804** will be formed by driving an end effector along programmed path **808.** Outer mold line **802** can be an example of the outer mold line of a composite structure comprising additional composite layers on surface **804** of an elongate composite member. In some illustrative examples, outer mold line **802** is the same as outer mold line **708 of** **Figure 7****.**

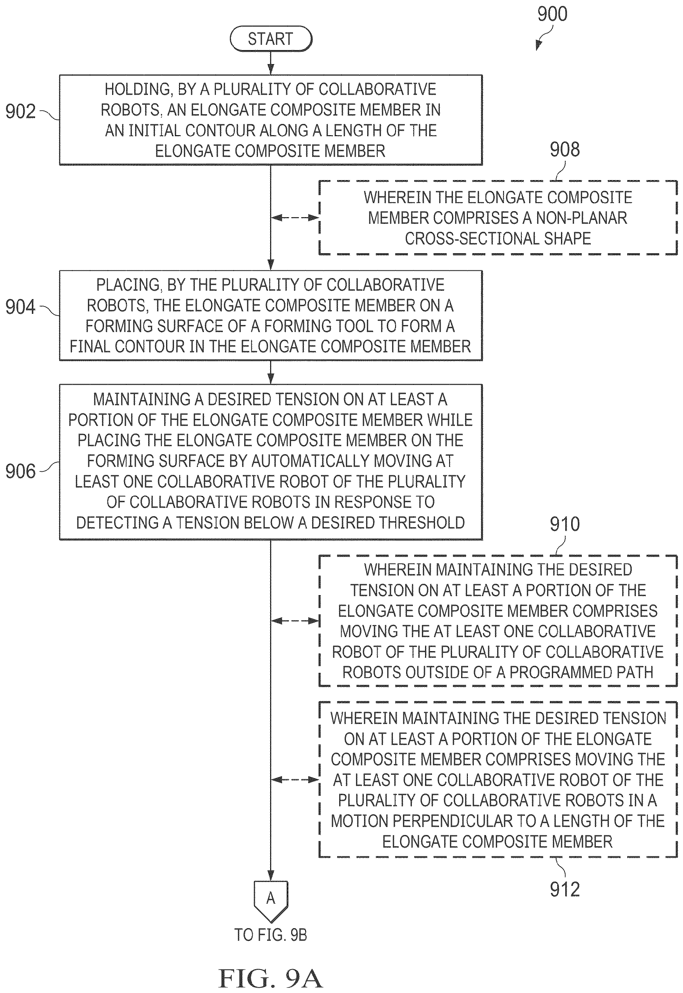

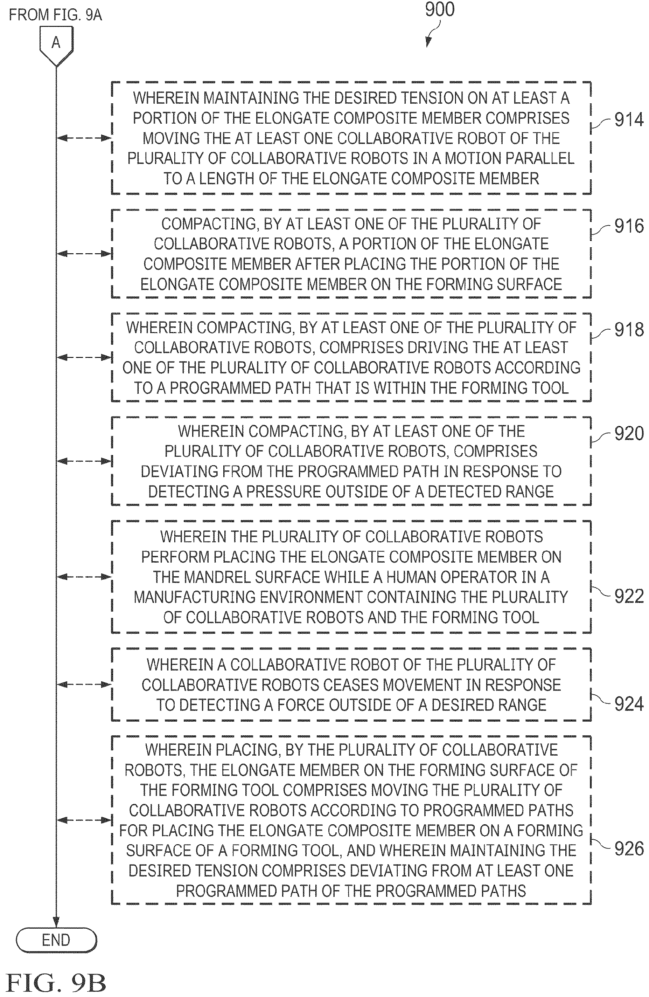

Turning now to **Figures 9A** and **9B****,** a flowchart of a method of shaping a composite structure is depicted in accordance with an illustrative example. Method **900** can be used to shape a composite structure of aircraft **100 of** **Figure 1****.** Method **900** can be used to shape elongate composite member **226 of** **Figure 2****.** Method **900** can be performed using plurality of collaborative robots **302 of** **Figure 3****.** Method **900** can be performed using plurality of collaborative robots **402 of** **Figure 4****.** Method **900** can be used to shape elongate composite member **500 of** **Figure 5****.** Method **900** could have been used to shape elongate composite member **600 of** **Figure 6****.**

Method **900** holds, by a plurality of collaborative robots, an elongate composite member in an initial contour along a length of the elongate composite member (operation **902).** Method **900** places, by the plurality of collaborative robots, the elongate composite member on a forming surface of a forming tool to form a final contour in the elongate composite member (operation **904).** Method **900** maintains a desired tension on at least a portion of the elongate composite member while placing the elongate composite member on the forming surface by automatically moving at least one collaborative robot of the plurality of collaborative robots in response to detecting a tension below a desired threshold (operation **906).** Afterwards, method **900** terminates.

In some illustrative examples, the elongate composite member comprises a nonplanar cross-sectional shape (operation **908).** In some illustrative examples, the elongate composite member comprises a hat-shaped cross-section. In some illustrative examples, the elongate composite member comprises at least one of a C shape cross-section, a J shape cross-section, an L shape cross-section, or a Z shape cross-section.

In some illustrative examples, maintaining the desired tension on at least a portion of the elongate composite member comprises moving the at least one collaborative robot of the plurality of collaborative robots outside of a programmed path (operation **910).** In some illustrative examples, maintaining the desired tension on at least a portion of the elongate composite member comprises moving the at least one collaborative robot of the plurality of collaborative robots in a motion perpendicular to a length of the elongate composite member (operation **912).** In some illustrative examples, maintaining the desired tension on at least a portion of the elongate composite member comprises moving the at least one collaborative robot of the plurality of collaborative robots in a motion parallel to a length of the elongate composite member (operation **914).**

In some illustrative examples, method **900** compacts, by at least one of the plurality of collaborative robots, a portion of the elongate composite member after placing the portion of the elongate composite member on the forming surface (operation **916).** In some illustrative examples, compacting, by at least one of the plurality of collaborative robots, comprises driving the at least one of the plurality of collaborative robots according to a programmed path that is within the forming tool (operation **918).** In some illustrative examples, compacting, by at least one of the plurality of collaborative robots, comprises deviating from the programmed path in response to detecting a pressure outside of a detected range (operation **920).**

In some illustrative examples, the plurality of collaborative robots perform placing the elongate composite member on the forming surface while a human operator is in a manufacturing environment containing the plurality of collaborative robots and the forming tool (operation **922).** In some illustrative examples, a collaborative robot of the plurality of collaborative robots ceases movement in response to detecting a force outside of a desired range (operation **924).**

In some illustrative examples, placing, by the plurality of collaborative robots, the elongate member on the forming surface of the forming tool comprises moving the plurality of collaborative robots according to programmed paths for placing the elongate composite member on a forming surface of a forming tool, and wherein maintaining the desired tension comprises deviating from at least one programmed path of the programmed paths (operation **926).** In some illustrative examples, deviating from at least one programmed path comprises moving a collaborative robot perpendicular to a length of the elongate composite member.

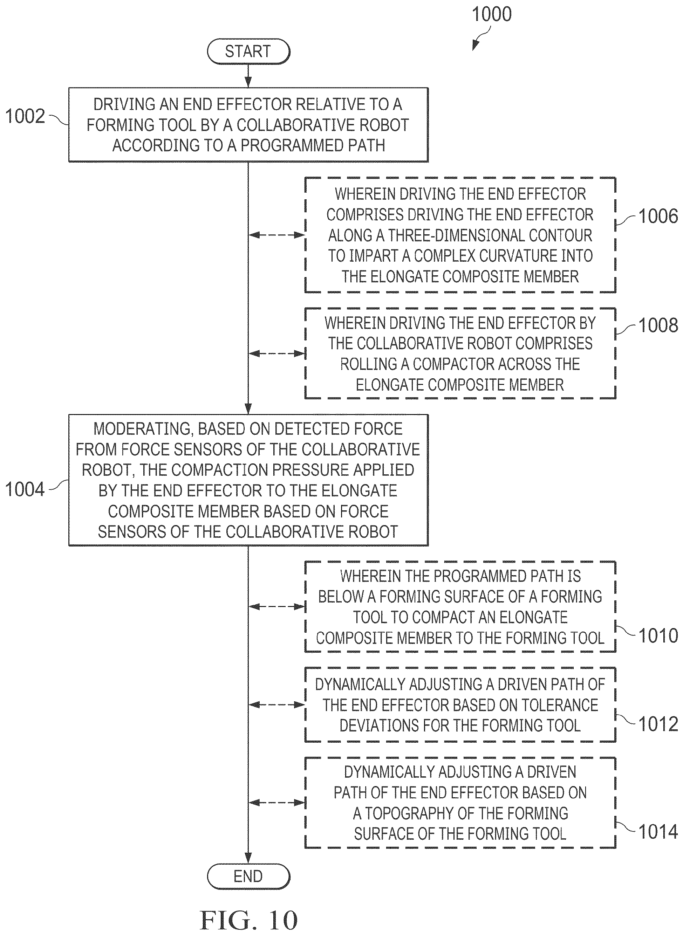

Turning now to **Figure 10****,** a flowchart of a method of compacting a composite structure is depicted in accordance with an illustrative example. Method **1000** can be used to compact a composite structure of aircraft **100 of** **Figure 1****.** Method **1000** can be used to compact elongate composite member **226 of** **Figure 2****.** Method **1000** can be performed using plurality of collaborative robots **302 of** **Figure 3****.** Method **1000** can be performed using plurality of collaborative robots **402 of** **Figure 4****.** Method **1000** can be used to compact elongate composite member **500 of** **Figure 5** after shaping. Method **1000** can be used to compact elongate composite member **600 of** **Figure 6****.**

Method **1000** drives an end effector relative to a forming tool by a collaborative robot according to a programmed path (operation **1002).** Method **1000** moderates, based on detected force from force sensors of the collaborative robot, compaction pressure applied by the end effector to the elongate composite member on the forming tool while driving the end effector based on force sensors of the collaborative robot (operation **1004).** Afterwards, method **1000** terminates.

In some illustrative examples, method **1000** moderates the force applied based upon the force detected falling outside of set limits. In some illustrative examples, method **1000** moderates the force applied based upon the force detected exceeding set limits. The force applied may exceed set limits if the programmed path is within the forming tool. In some illustrative examples, the force applied may be below set limits if the programmed path is above the forming surface of the forming tool.

In some illustrative examples, driving the end effector comprises driving the end effector along a three-dimensional contour to impart a complex curvature into the elongate composite member (operation **1006).** In some illustrative examples, the end effector comprises a roller compactor. In some illustrative examples, driving the end effector by the collaborative robot comprises rolling a compactor across the elongate composite member (operation **1008).**

In some illustrative examples, the programmed path is below a forming surface of a forming tool to compact the composite member to the forming tool (operation **1010).** In some illustrative examples, the collaborative robot continues attempting to drive the end effector along the programmed path despite the programmed path being below the forming surface.

In some illustrative examples, method **1000** dynamically adjusts a driven path of the end effector based on tolerance deviations for the forming tool (operation **1012).** In some illustrative examples, method **1000** dynamically adjusts a driven path of the end effector based on a topography of the forming surface of the forming tool (operation **1014).**

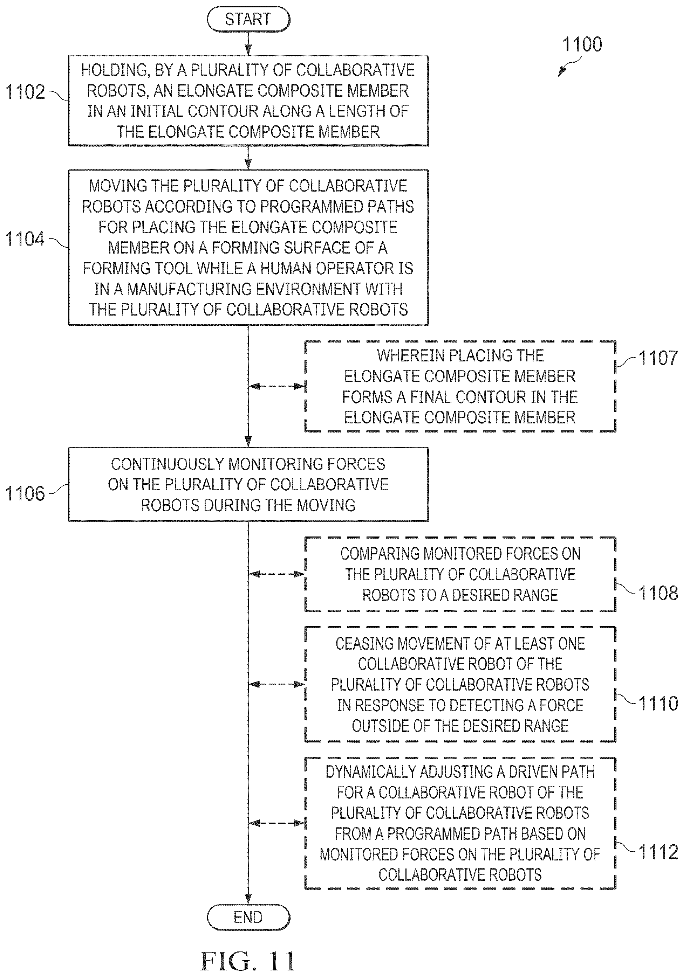

Turning now to **Figure 11****,** a flowchart of a method of forming a composite structure is depicted in accordance with an illustrative example. Method **1100** can be used to form a composite structure of aircraft **100 of** **Figure 1****.** Method **1100** can be used to form elongate composite member **226 of** **Figure 2** into final contour **230.** Method **1100** can be performed using plurality of collaborative robots **302 of** **Figure 3****.** Method **1100** can be performed using plurality of collaborative robots **402 of** **Figure 4****.** Method **1100** can be used to form elongate composite member **500 of** **Figure 5****.** Method **1100** can be used to form elongate composite member **600 of** **Figure 6****.**

Method **1100** holds, by a plurality of collaborative robots, an elongate composite member in an initial contour along a length of the elongate composite member (operation **1102).** Method **1100** moves the plurality of collaborative robots according to programmed paths for placing the elongate composite member on a forming surface of a forming tool while a human operator is in a manufacturing environment with the plurality of collaborative robots (operation **1104).** Method **1100** continuously monitors forces on the plurality of collaborative robots during the moving (operation **1106).** Afterwards, method **1100** terminates.

In some illustrative examples, placing the elongate composite member forms a final contour in the elongate composite member (operation **1107).** In some illustrative examples, method **1100** compares monitored forces on the plurality of collaborative robots to a desired range (operation **1108).** In some illustrative examples, method **1100** ceases movement of at least one collaborative robot of the plurality of collaborative robots in response to detecting a force outside of the desired range (operation **1110).**

In some illustrative examples, method **1100** dynamically adjusts a driven path for a collaborative robot of the plurality of collaborative robots from a programmed path based on monitored forces on the plurality of collaborative robots (operation **1112).**

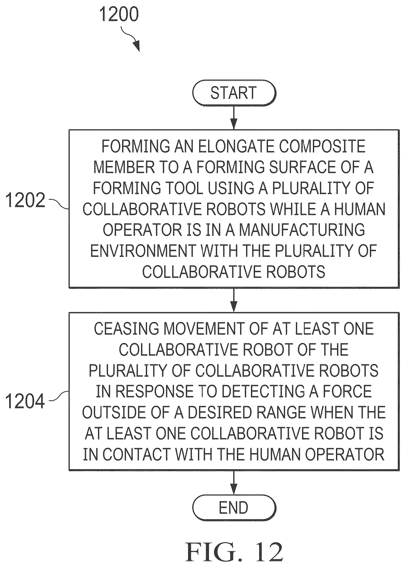

Turning now to **Figure 12****,** a flowchart of a method of forming a composite structure is depicted in accordance with an illustrative example. Method **1200** can be used to form a composite structure of aircraft **100 of** **Figure 1****.** Method **1200** can be used to form elongate composite member **226 of** **Figure 2** into final contour **230.** Method **1200** can be performed using plurality of collaborative robots **302 of** **Figure 3****.** Method **1200** can be performed using plurality of collaborative robots **402 of** **Figure 4****.** Method **1200** can be used to form elongate composite member **500 of** **Figure 5****.** Method **1200** can be used to form elongate composite member **600 of** **Figure 6****.**

Method **1200** forms an elongate composite member to a forming surface of a forming tool using a plurality of collaborative robots while a human operator is in a manufacturing environment with the plurality of collaborative robots (operation **1202).** Method **1200** ceases movement of at least one collaborative robot of the plurality of collaborative robots in response to detecting a force outside of a desired range when the at least one collaborative robot is in contact with the human operator (operation **1204).** Afterwards, method **1200** terminates.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **908** through operation **926** may be optional. As another example, operation **1006** through operation **1014** may be optional. As another example, operation **1108** through operation **1112** may be optional.

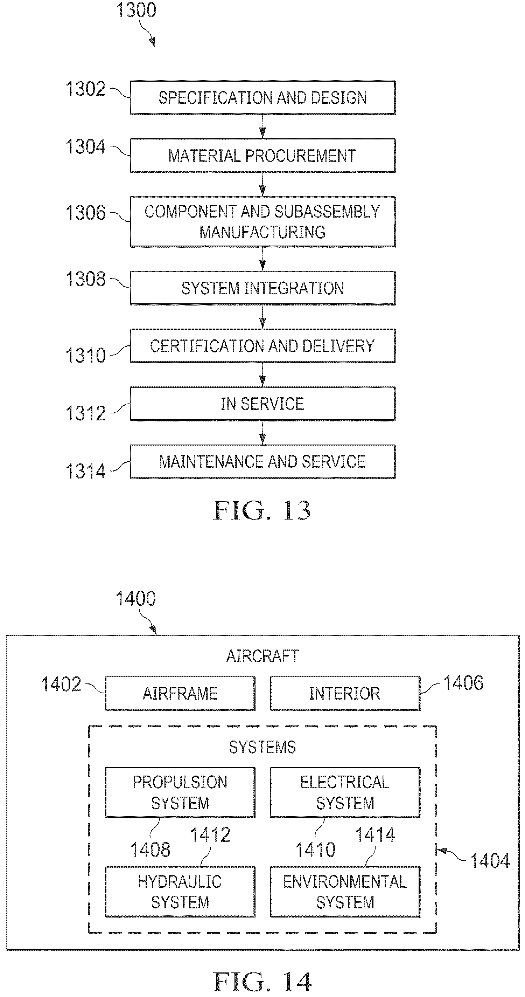

Illustrative examples of the present disclosure may be described in the context of aircraft manufacturing and service method **1300** as shown in **Figure 13** and aircraft **1400** as shown in **Figure 14****.** Turning first to **Figure 13****,** an illustration of an aircraft manufacturing and service method in a form of a block diagram is depicted in accordance with an illustrative example. During pre-production, aircraft manufacturing and service method **1300** may include specification and design **1302** of aircraft **1400 in** **Figure 14** and material procurement **1304.**

During production, component and subassembly manufacturing **1306** and system integration **1308** of aircraft **1400** takes place. Thereafter, aircraft **1400** may go through certification and delivery **1310** in order to be placed in service **1312.** While in service **1312** by a customer, aircraft **1400** is scheduled for routine maintenance and service **1314,** which may include modification, reconfiguration, refurbishment, or other maintenance and service.

Each of the processes of aircraft manufacturing and service method **1300** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 14****,** an illustration of an aircraft in a form of a block diagram is depicted in which an illustrative example may be implemented. In this example, aircraft **1400** is produced by aircraft manufacturing and service method **1300 of** **Figure 13** and may include airframe **1402** with plurality of systems **1404** and interior **1406.** Examples of systems **1404** include one or more of propulsion system **1408,** electrical system **1410,** hydraulic system **1412,** and environmental system **1414.** Any number of other systems may be included.

Apparatuses and methods embodied herein may be employed during at least one of the stages of aircraft manufacturing and service method **1300.** One or more illustrative examples may be manufactured or used during at least one of component and subassembly manufacturing **1306,** system integration **1308,** in service **1312,** or maintenance and service **1314 of** **Figure 13****.**

The illustrative examples enables a human operator to work near robots. In the illustrative examples, a sensing mechanism within the robot senses the force that the robot is applying. In the illustrative examples, when a force threshold is reached, the operation creating the force overload is stopped. Stopping the operation creating the force overload will deactivate the robot from contacting a human operator with force above the force threshold.

The illustrative examples utilize collaborative robots with force control and torque control for applying and controlling compaction force to the elongate composite member, such as a stringer, on the forming surface of the forming tool. The illustrative examples, the system is agnostic to tool surface topography by using force control and torque control. Additionally, collaborative robot compliance can be used for lateral self-alignment within an elongate composite member. The collaborative robot compliance can be used for applying/controlling lengthwise tension in the elongate composite member during steering sequence. Tension is part of the forming process and may be part of the pick, transport and place process. The illustrative examples can reduce drooping of the elongate composite member between the end effectors. The illustrative examples can optimize system accuracy regardless of dimensional tool tolerance errors

The illustrative examples provide adequate support of an elongate composite member formed of an uncured composite material. The illustrative examples provide accurate coordination of handlers for an elongate composite member during an installation and forming sequence of the elongate composite member.

The illustrative examples increase process repeatability and process reliability. The illustrative examples can improve cycle rate control. The illustrative examples can accommodate heat usage during forming of an elongate composite member. In some illustrative examples, the system can reduce heat usage during forming of an elongate composite member.

The illustrative examples can improve quality of elongate composite structures through at least one of improved handling, improved forming, and improved compaction. The illustrative examples can automate greater percentages of composite forming. The illustrative examples can reduce the use of human operators in composite manufacturing. Using the force, torque and compliance features of the collaborative robots helps to ensure part quality, limit handling inconsistencies such as wrinkles or bends, and ensure placement accuracy of member onto tool.

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

The disclosure further comprises the following clauses:
1. A method of shaping a composite structure comprising:
   holding, by a plurality of collaborative robots, an elongate composite member in an initial contour along a length of the elongate composite member;
   placing, by the plurality of collaborative robots, the elongate composite member on a forming surface of a forming tool to form a final contour in the elongate composite member; and
   maintaining a desired tension on at least a portion of the elongate composite member while placing the elongate composite member on the forming surface by automatically moving at least one collaborative robot of the plurality of collaborative robots in response to detecting a tension below a desired threshold.
2. The method of clause 1, wherein maintaining the desired tension on at least a portion of the elongate composite member comprises moving at the least one collaborative robot of the plurality of collaborative robots outside of a programmed path.
3. The method of clause 1 or 2, wherein maintaining the desired tension on at least a portion of the elongate composite member comprises moving the at least one collaborative robot of the plurality of collaborative robots in a motion perpendicular to a length of the elongate composite member.
4. The method of any one of clauses 1-3, wherein maintaining the desired tension on at least a portion of the elongate composite member comprises moving the at least one collaborative robot of the plurality of collaborative robots in a motion parallel to a length of the elongate composite member.
5. The method of any one of clauses 1-4, wherein the elongate composite member comprises a nonplanar cross-sectional shape.
6. The method of any one of clauses 1-5, further comprising:
   compacting, by at least one of the plurality of collaborative robots, a portion of the elongate composite member after placing the portion of the elongate composite member on the forming surface.
7. The method of clause 6, wherein compacting, by at least one of the plurality of collaborative robots, comprises driving the at least one of the plurality of collaborative robots according to, and/or along, a programmed path that is within the forming tool.
8. The method of clause 6 or 7, wherein compacting, by at least one of the plurality of collaborative robots, comprises deviating from a programmed path in response to detecting a pressure outside of a detected range.
9. The method of any one of clauses 1-8, wherein the plurality of collaborative robots perform placing the elongate composite member on the forming surface while a human operator is in a manufacturing environment containing the plurality of collaborative robots and the forming tool.
10. The method of clause 9, wherein a collaborative robot of the plurality of collaborative robots ceases movement in response to detecting a force outside of a desired range.
11. The method of any one of clauses 1-10, wherein placing, by the plurality of collaborative robots, the elongate composite member on the forming surface of the forming tool comprises moving the plurality of collaborative robots according to programmed paths for placing the elongate composite member on a forming surface of a forming tool, and wherein maintaining the desired tension comprises deviating from at least one programmed path of the programmed paths.
12. A method of compacting an elongate composite member comprising:
   driving an end effector relative to a forming tool by a collaborative robot according to a programmed path; and
   moderating, based on detected force from force sensors of the collaborative robot, compaction pressure applied by the end effector to the elongate composite member on the forming tool while driving the end effector, preferably based on force sensors of the collaborative robot.
13. The method of clause 12, wherein the programmed path is below a forming surface of the forming tool to compact the elongate composite member to the forming tool.
14. The method of clause 12 or 13, further comprising:
   dynamically adjusting a driven path of the end effector based on tolerance deviations for the forming tool.
15. The method of any one of clauses 12-14, further comprising:
   dynamically adjusting a driven path of the end effector based on a topography of a forming surface of the forming tool.
16. The method of any one of clauses 12-15, wherein driving the end effector comprises driving the end effector along a three-dimensional contour to impart a complex curvature into the elongate composite member.
17. The method of any one of clauses 12-16, wherein driving the end effector by the collaborative robot comprises rolling a compactor across the elongate composite member.
18. A method of forming a composite structure comprising:
   holding, by a plurality of collaborative robots, an elongate composite member in an initial contour along a length of the elongate composite member;
   moving the plurality of collaborative robots according to programmed paths for placing the elongate composite member on a forming surface of a forming tool while a human operator is in a manufacturing environment with the plurality of collaborative robots; and
   continuously monitoring forces on the plurality of collaborative robots during the moving.
19. The method of clause 18, further comprising:
   comparing monitored forces on the plurality of collaborative robots to a desired range; and
   ceasing movement of at least one collaborative robot of the plurality of collaborative robots in response to detecting a force outside of the desired range.
20. The method of clause 18 or 19, further comprising:
   dynamically adjusting a driven path for a collaborative robot of the plurality of collaborative robots from a programmed path based on monitored forces on the plurality of collaborative robots.
21. The method of any one of clauses 18-20, wherein placing the elongate composite member forms a final contour in the elongate composite member.
22. A method of forming a composite structure comprising:
   forming an elongate composite member to a forming surface of a forming tool using a plurality of collaborative robots while a human operator is in a manufacturing environment with the plurality of collaborative robots; and
   ceasing movement of at least one collaborative robot of the plurality of collaborative robots in response to detecting a force outside of a desired range when the at least one collaborative robot is in contact with the human operator.

## Claims

1. A method (900) of shaping a composite structure (706) comprising:
holding (902), by a plurality of collaborative robots (204, 302, 402), an elongate composite member (226, 304, 408, 500, 600, 704) in an initial contour (146, 228, 306, 414, 502) along a length (232, 310, 506, 606) of the elongate composite member (226, 304, 408, 500, 600, 704);
placing (904), by the plurality of collaborative robots (204, 302, 402), the elongate composite member (226, 304, 408, 500, 600, 704) on a forming surface (241, 406, 804) of a forming tool (240, 404, 702) to form a final contour (230, 412, 602) in the elongate composite member (226, 304, 408, 500, 600, 704); and
maintaining (906 a desired tension (238) on at least a portion of the elongate composite member (226, 304, 408, 500, 600, 704) while placing the elongate composite member (226, 304, 408, 500, 600, 704) on the forming surface (241, 406, 804) by automatically moving at least one collaborative robot of the plurality of collaborative robots (204, 302, 402) in response to detecting a tension (238) below a desired threshold.

2. The method (900) of claim 1, wherein (910) maintaining the desired tension (238) on at least a portion of the elongate composite member (226, 304, 408, 500, 600, 704) comprises moving the at least one collaborative robot of the plurality of collaborative robots (204, 302, 402) outside of a programmed path (250, 714, 808).

3. The method (900) of claim 1 or 2, wherein (912) maintaining the desired tension (238) on at least a portion of the elongate composite member (226, 304, 408, 500, 600, 704) comprises moving the at least one collaborative robot of the plurality of collaborative robots (204, 302, 402) in a motion perpendicular to a length (232, 310, 506, 606) of the elongate composite member (226, 304, 408, 500, 600, 704).

4. The method (900) of any one of the preceding claims, wherein (914) maintaining the desired tension (238) on at least a portion of the elongate composite member (226, 304, 408, 500, 600, 704) comprises moving the at least one collaborative robot of the plurality of collaborative robots (204, 302, 402) in a motion parallel to a length (232, 310, 506, 606) of the elongate composite member (226, 304, 408, 500, 600, 704).

5. The method (900) of any one of the preceding claims, wherein (908) the elongate composite member (226, 304, 408, 500, 600, 704) comprises a nonplanar cross-sectional shape (236).

6. The method (900) of any one of the preceding claims, further comprising:
compacting (220, 916), by at least one of the plurality of collaborative robots (204, 302, 402), a portion of the elongate composite member (226, 304, 408, 500, 600, 704) after placing the portion of the elongate composite member (226, 304, 408, 500, 600, 704) on the forming surface (241, 406, 804).

7. The method (900) of claim 6, wherein:
(918) compacting (220), by at least one of the plurality of collaborative robots (204, 302, 402), comprises driving the at least one of the plurality of collaborative robots (204, 302, 402) along a programmed path (250, 714, 808) that is within the forming tool (240, 404, 702); and/or
compacting (220), by at least one of the plurality of collaborative robots (204, 302, 402), comprises deviating from a programmed path (250, 714, 808) in response to detecting a pressure outside of a detected range.

8. The method (900) of any one of the preceding claims, wherein (922) the plurality of collaborative robots (204, 302, 402) perform placing the elongate composite member (226, 304, 408, 500, 600, 704) on the forming surface (241, 406, 804) while a human operator (252) in a manufacturing environment (200) containing the plurality of collaborative robots (204, 302, 402) and the forming tool (240, 404, 702), preferably wherein:
(924) a collaborative robot of the plurality of collaborative robots (204, 302, 402) ceases movement in response to detecting a force outside of a desired range.

9. The method (900) of any one of the preceding claims, wherein placing (926), by the plurality of collaborative robots (204, 302, 402), the elongate composite member (226, 304, 408, 500, 600, 704) on the forming surface (241, 406, 804) of the forming tool (240, 404, 702) comprises moving the plurality of collaborative robots (204, 302, 402) according to programmed paths (250, 714, 808) for placing the elongate composite member (226, 304, 408, 500, 600, 704) on a forming surface (241, 406, 804) of a forming tool (240, 404, 702), and wherein maintaining the desired tension (238) comprises deviating from at least one programmed path (250, 714, 808) of the programmed paths (250, 714, 808).

10. A method (1000) of compacting (220) an elongate composite member (226, 304, 408, 500, 600, 704) comprising:
driving (1002) an end effector (214) relative to a forming tool (240, 404, 702) by a collaborative robot according to a programmed path (250, 714, 808); and
moderating (1004), based on detected force from force sensors (208) of the collaborative robot, compaction pressure applied by the end effector (214) to the elongate composite member (226, 304, 408, 500, 600, 704) on the forming tool (240, 404, 702) while driving the end effector (214) based on force sensors (208) of the collaborative robot.

11. The method (1000) of claim 10, wherein:
(1010) the programmed path (250, 714, 808) is below a forming surface (241, 406, 804) of the forming tool (240, 404, 702) to compact the elongate composite member (226, 304, 408, 500, 600, 704) to the forming tool (240, 404, 702); and/or
(1006) driving the end effector (214) comprises driving the end effector (214) along a three-dimensional contour to impart a complex curvature into the elongate composite member (226, 304, 408, 500, 600, 704); and/or
(1008) driving the end effector (214) by the collaborative robot comprises rolling a compactor (218) across the elongate composite member (226, 304, 408, 500, 600, 704).

12. The method (1000) of claim 10 or 11, further comprising:
dynamically (1012) adjusting a driven path of the end effector (214) based on tolerance deviations for the forming tool (240, 404, 702); and/or
dynamically (1014) adjusting a driven path of the end effector (214) based on a topography of a forming surface (241, 406, 804) of the forming tool (240, 404, 702).

13. A method (1100) of forming a composite structure (706) comprising:
holding (1102), by a plurality of collaborative robots (204, 302, 402), an elongate composite member (226, 304, 408, 500, 600, 704) in an initial contour (146, 228, 306, 414, 502) along a length (232, 310, 506, 606) of the elongate composite member (226, 304, 408, 500, 600, 704);
moving (1104) the plurality of collaborative robots (204, 302, 402) according to programmed path (250, 714, 808)s for placing the elongate composite member (226, 304, 408, 500, 600, 704) on a forming surface (241, 406, 804) of a forming tool (240, 404, 702) while a human operator (252) is in a manufacturing environment (200) with the plurality of collaborative robots (204, 302, 402),; and
continuously (1106) monitoring forces on the plurality of collaborative robots (204, 302, 402) during the moving.

14. The method (1100) of claim 13, wherein:
the method further comprises comparing (1108) monitored forces on the plurality of collaborative robots (204, 302, 402) to a desired range, and ceasing (1110) movement of at least one collaborative robot of the plurality of collaborative robots (204, 302, 402) in response to detecting a force outside of the desired range; and/or
the method further comprises dynamically (1112) adjusting a driven path for a collaborative robot of the plurality of collaborative robots (204, 302, 402) from a programmed path (250, 714, 808) based on monitored forces on the plurality of collaborative robots (204, 302, 402); and/or
placing the elongate composite member (226, 304, 408, 500, 600, 704) forms a final contour (230, 412, 602) in the elongate composite member (226, 304, 408, 500, 600, 704).

15. A method (1200) forming a composite structure (706) comprising:
forming (1202) an elongate composite member (226, 304, 408, 500, 600, 704)to a forming surface (241) of a forming tool (240) using a plurality of collaborative robots (204, 302, 402)while a human operator (252) is in a manufacturing environment (200) with the plurality of collaborative robots (204, 302, 402); and
ceasing (1204) movement of at least one collaborative robot of the plurality of collaborative robots (204, 302, 402) in response to detecting a force outside of a desired range when the at least one collaborative robot is in contact with the human operator (252).
